# EUROPEAN PATENT SPECIFICATION

(11) **EP 3 950 752 B1**
(45) Date of publication and mention of the grant of the patent: **21.02.2024**
(21) Application number: 20822953.4
(22) Date of filing: 05.06.2020
(51) Int. Cl.: C08F 290/06, G02B 6/44

(54) **RESIN COMPOSITION, OPTICAL FIBER, AND METHOD FOR PRODUCING OPTICAL FIBER**
HARZZUSAMMENSETZUNG, OPTISCHE FASER UND VERFAHREN ZUR HERSTELLUNG EINER OPTISCHEN FASER
COMPOSITION DE RÉSINE, FIBRE OPTIQUE ET PROCÉDÉ DE PRODUCTION DE FIBRE OPTIQUE

(30) Priority: 11.06.2019 JP 2019108597
(43) Date of publication of application: 09.02.2022
(73) Proprietor: SUMITOMO ELECTRIC INDUSTRIES, LTD., Osaka-shi, Osaka 541-0041 (JP)
(72) Inventor: HAMAKUBO, Katsushi, Osaka-shi, Osaka 541-0041 (JP); TOKUDA, Chiaki, Osaka-shi, Osaka 541-0041 (JP); FUJII, Takashi, Osaka-shi, Osaka 541-0041 (JP)
(74) Representative: Hoffmann Eitle
(86) International application number: PCT/JP2020/022404
(87) International publication number: WO 2020/250838

(56) References cited:
- EP-A1- 3 778 682
- EP-A2- 0 780 712
- WO-A1-2019/194198
- WO-A2-2016/081557
- JP-A- H0 269 706
- JP-A- 2000 007 717
- JP-A- 2004 204 206
- JP-A- 2010 511 770
- US-A1- 2006 084 716
- US-A1- 2012 321 265
- US-A1- 2018 128 970
- SHIUE, J. et al.: "Effects of silica nanoparticle addition to the secondary coating of dual-coated optical fibers", Shiue J, Matthewson M, Stupak P, Rondinella V, June 2006 (2006-06), pages 2631-2636, XP027889775,

## Description

### Technical Field

The present disclosure relates to a resin composition, an optical fiber, and a method for manufacturing the optical fiber.

This application claims priority based on Japanese Patent Application No. 2019-108597 filed on June 11, 2019.

### Background Art

An optical fiber has generally a coating resin layer for protecting a glass fiber that is an optical transmission medium. In order to reduce an increase in transmission loss induced by micro-bend generated when lateral pressure is applied to the optical fiber, the optical fiber has been required to have excellent lateral pressure characteristics.

The coating resin layer can be formed by using an ultraviolet curable resin composition containing an oligomer, a monomer, a photopolymerization initiator and the like. For example, in Patent Literature 1, it is investigated to improve the lateral pressure characteristics of the optical fiber by forming a resin layer using an ultraviolet curable resin composition containing a filler made of synthetic silica as a raw material.
Patent Literature 2 describes a one-part, radiation-curable liquid matrix composition comprising an aliphatic urethane oligomer, a reactive monomer, a release agent and a photoinitiator for affixing optical fibers in a ribbon configuration. Patent Literature 3 describes a low-density, UV-curable composition comprising a low density, (meth)acrylate-functionalized oligomer and a (meth)acrylate monomer for coating an optical fiber.

### Citation List

### Patent Literature

[Patent Literature 1] JP 2014-219550 A
[Patent Literature 2] EP 0 780 712 A2 describes a resin composition comprising an aliphatic urethane acrylate oligomer; a reactive monomer having one or more acrylate or methacrylate moieties; a release agent; and an optional photoinitiator.
[Patent Literature 3] WO 2016/081557 A2 EP 3 778 682 A1 discloses a resin composition of the state of the art according to Article 54(3) EPC.

### Summary of Invention

A resin composition according to an aspect of the present disclosure comprises a base resin containing an oligomer comprising a urethane (meth)acrylate oligomer, a monomer, and a photopolymerization initiator, and hydrophobic inorganic oxide particles, wherein the urethane (meth)acrylate oligomer is obtained by reacting a polyol compound, a polyisocyanate compound and a hydroxyl group-containing (meth)acrylate compound, wherein the monomer comprises a monomer having a phenoxy group, wherein a hydrophobic group is introduced onto the surface of the inorganic oxide particles, and the hydrophobic group is a reactive group such as a (meth)acryloyl group or a vinyl group, or a non-reactive group such as an aliphatic hydrocarbon group or an aromatic hydrocarbon group, and wherein the breaking elongation of a resin film obtained by curing the resin composition with an integrated light amount of 900 mJ/cm² or more and 1100 mJ/cm² or less is 2.5% or more and 50% or less at 23°C, and the Young's modulus of the resin film is 1150 MPa or more and 2700 MPa or less at 23°C.

### Brief Description of Drawing

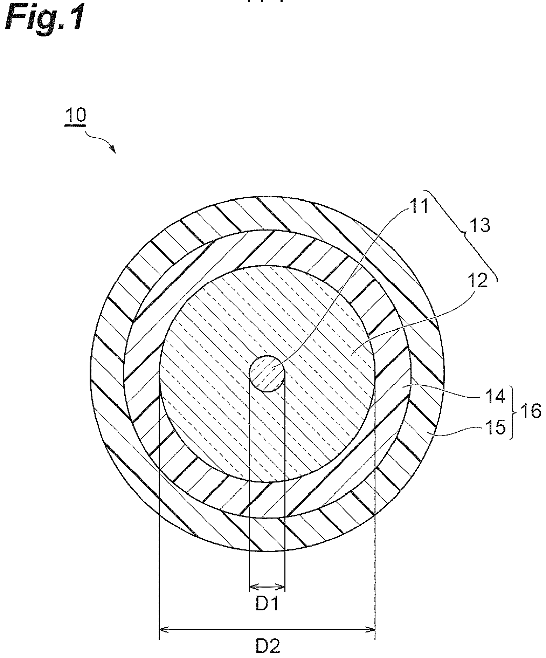

[FIG. 1] FIG. 1 is a schematic cross-section diagram showing an example of the optical fiber according to the present embodiment.

### Description of Embodiments

### [Problem to be Solved by the Present Disclosure]

A coating resin layer generally includes a primary resin layer and a secondary resin layer. The resin composition forming the secondary resin layer is required to improve the lateral pressure characteristics of the optical fiber by increasing the Young's modulus. However, the toughness of the resin layer formed from the resin composition containing the filler is lowered, causing the coating resin layer to crack in bending the optical fiber, and as a result, the optical fiber may not withstand long-term use.

An object of the present disclosure is to provide a resin composition capable of forming a resin layer having excellent toughness and an optical fiber including the secondary resin layer formed from the resin composition.

### [Effects of the Present Disclosure]

The present disclosure can provide a resin composition capable of forming a resin layer having excellent toughness and an optical fiber including the secondary resin layer formed from the resin composition.

### [Description of Embodiments of the Present Disclosure]

First, the contents of the embodiment of the present disclosure will be described by listing them. A resin composition according to an aspect of the present disclosure comprises a base resin containing an oligomer comprising a urethane (meth)acrylate oligomer, a monomer, and a photopolymerization initiator, and hydrophobic inorganic oxide particles, wherein the urethane (meth)acrylate oligomer is obtained by reacting a polyol compound, a polyisocyanate compound and a hydroxyl group-containing (meth)acrylate compound, wherein the monomer comprises a monomer having a phenoxy group, wherein a hydrophobic group is introduced onto the surface of the inorganic oxide particles, and the hydrophobic group is a reactive group such as a (meth)acryloyl group or a vinyl group, or a non-reactive group such as an aliphatic hydrocarbon group or an aromatic hydrocarbon group, and wherein the breaking elongation of a resin film obtained by curing the resin composition with an integrated light amount of 900 mJ/cm² or more and 1100 mJ/cm² or less is 2.5% or more and 50% or less at 23°C, and the Young's modulus of the resin film is 1150 MPa or more and 2700 MPa or less at 23°C.

Such resin composition can form a resin layer having excellent toughness. In addition, an optical fiber having excellent lateral pressure characteristics can be prepared by using the above resin composition as an ultraviolet curable resin composition for coating the optical fiber.

Since the resin layer has an excellent balance between Young's modulus and elongation, the content of the urethane (meth)acrylate oligomer may be 15% by mass or more and 70% by mass or less based on the total amount of the oligomer and the monomer.

Due to easy formation of a tough resin layer, the monomer includes a monomer having a phenoxy group.

Due to excellent dispersion properties in the resin composition and easy adjustment of Young's modulus, the inorganic oxide particles may be particles including at least one selected from the group consisting of silicon dioxide, zirconium dioxide, aluminum oxide, magnesium oxide, titanium oxide, tin oxide, and zinc oxide. Due to formation of a resin layer with a high Young's modulus, the average primary particle size of the inorganic oxide particles may be 5 nm or more and 800 nm or less.

Due to easy formation of a tougher resin layer, the breaking elongation of the resin film may be 5.0% or more and 45% or less at 23°C.

The optical fiber according to an aspect of the present disclosure comprises a glass fiber comprising a core and a cladding, a primary resin layer being in contact with a glass fiber and coating the glass fiber, and a secondary resin layer coating the primary resin layer, wherein the secondary resin layer includes a cured product of the resin composition. Accordingly, the lateral pressure characteristics of the optical fiber can be improved.

A method for manufacturing the optical fiber according to an aspect of the present disclosure comprises an application step of applying the above resin composition onto the outer periphery of a glass fiber composed of a core and a cladding and a curing step of curing the resin composition by irradiation with ultraviolet rays after the application step. This can form a resin layer having excellent toughness, allowing production of an optical fiber capable of preventing external wound during rewinding work.

### [Detail of Embodiment of the Present Disclosure]

Specific examples of a resin composition and an optical fiber according to the present embodiment will be described referring to the drawing as necessary. The present invention is not limited to these illustrations In the following description, the same reference numerals are given to the same elements in the description of the drawing, and redundant explanations are omitted.

### <Resin composition>

The resin composition according to the present embodiment comprises a base resin containing an oligomer comprising a urethane (meth)acrylate oligomer, a monomer, and a photopolymerization initiator, and hydrophobic inorganic oxide particles.

From the viewpoint of forming the resin layer having excellent toughness, the breaking elongation of the resin film obtained by curing the above resin composition with an integrated light amount of 900 mJ/cm² or more and 1100 mJ/cm² or less is 2.5% or more and 50% or less at 23°C. The lower limit of the breaking elongation of the resin film may be 2.6% or more, 2.8% or more, 5.0% or more, or 7.0% or more, and the upper limit of the breaking elongation of the resin film may be 48% or less, 45% or less, or 40% or less. The breaking elongation of the resin film is preferably 5.0% or more and 45% or less, and more preferably 7.0% or more and 45% or less at 23°C, because the effect of the present disclosure can be easily exhibited.

The Young's modulus of the above resin film is 1150 MPa or more and 2700 MPa or less at 23°C, preferably 1200 MPa or more and 2600 MPa or less, and more preferably 1200 MPa or more and 2500 MPa or less. The Young's modulus of the resin film of 1150 MPa or more is easy to improve the lateral pressure characteristics of the optical fiber. The Young's modulus of the resin film of 2700 MPa or less can provide proper toughness to the secondary resin layer so that crack or the like in the secondary resin layer is hard to occur.

### (Base resin)

The oligomer according to the present embodiment includes a urethane (meth)acrylate oligomer. As the urethane (meth)acrylate oligomer, an oligomer obtained by reacting a polyol compound, a polyisocyanate compound, and a hydroxyl group-containing (meth)acrylate compound is used. (Meth)acrylate means an acrylate or a methacrylate corresponding to it. The same applies to (meth)acrylic acid.

Examples of the polyol compound include polytetramethylene glycol, polypropylene glycol, and bisphenol A-ethylene oxide addition diol. Examples of the polyisocyanate compound includes 2,4-tolylene diisocyanate, 2,6-tolylene diisocyanate, isophorone diisocyanate, and dicyclohexylmethane 4,4'-diisocyanate. Examples of the hydroxyl group-containing (meth)acrylate compound include 2-hydroxyethyl (meth)acrylate, 2-hydroxybutyl (meth)acrylate, 1,6-hexanediol mono(meth)acrylate, pentaerythritol tri(meth)acrylate, 2-hydroxypropyl (meth)acrylate, and tripropylene glycol mono(meth)acrylate.

From the viewpoint of adjusting the Young's modulus and elongation of the resin film, the number average molecular weight of the polyol compound is preferably 300 or more and 3000 or less, more preferably 400 or more and 2500 or less, and further preferably 500 or more and 2000 or less.

As a catalyst for synthesizing a urethane (meth)acrylate oligomer, an organotin compound is generally used. Examples of the organotin compound include dibutyltin dilaurate, dibutyltin diacetate, dibutyltin maleate, dibutyltin bis(2-ethylhexyl mercaptoacetate), dibutyltin bis(isooctyl mercaptoacetate), and dibutyltin oxide. From the view point of easy availability or catalyst performance, it is preferable that dibutyltin dilaurate or dibutyltin diacetate be used as catalyst.

When the urethane (meth)acrylate oligomer is synthesized, lower alcohols having 5 or less carbon atoms may be used. Examples of the lower alcohols include methanol, ethanol, 1-propanol, 2-propanol, 1-butanol, 2-butanol, 2-methyl-2-propanol, 1-pentanol, 2-pentanol, 3-pentanol, 2-methyl-1-butanol, 3-methyl-1-butanol, 2-methyl-2-butanol, 3-methyl-2-butanol, and 2,2-dimethyl-1-propanol.

From the viewpoint of increasing the toughness of the resin layer, the content of the urethane (meth)acrylate oligomer is preferably 15% by mass or more and 70% by mass or less, more preferably 16% by mass or more and 65% by mass or less, and further preferably 17% by mass or more and 60% by mass or less based on the total amount of the oligomer and the monomer.

From the viewpoint of increasing the Young's modulus of the resin film, the oligomer may further contain an epoxy (meth)acrylate oligomer. As an epoxy (meth)acrylate oligomer, an oligomer obtained by reacting a compound having a (meth)acryloyl group with an epoxy resin having two or more glycidyl groups can be used.

As the monomer, a monofunctional monomer having one polymerizable group or a multifunctional monomer having two or more polymerizable groups can be used. A monomer may be used by mixing two or more monomers.

Due to easy formation of a tough resin layer, a monomer having a phenoxy group is used as a monomer.

A (meth)acrylate compound having a phenoxy group can be used as the monomer having a phenoxy group. Examples of the (meth)acrylate compound having a phenoxy group include phenol EO-modified (meth)acrylate, nonylphenol EO-modified (meth)acrylate, phenol PO-modified (meth)acrylate, nonylphenol PO-modified (meth)acrylate, phenoxyethyl (meth)acrylate, 2-hydroxy-3-phenoxypropyl (meth)acrylate, and 3-phenoxybenzyl (meth)acrylate. EO-modification means having an ethylene oxide group represented by (C₂H₄O)ₙ, and PO-modification means having a propylene oxide group represented by (C₃H₆Oₙ. n is an integer of 1 or more.

From the viewpoint of adjusting the Young's modulus of the resin film, the monomer having a phenoxy group may be at least one selected from the group consisting of phenol EO-modified acrylate, nonylphenol EO-modified acrylate, phenoxyethyl acrylate, 2-hydroxy-3-phenoxypropyl acrylate, and 3-phenoxybenzyl acrylate. The monomer having a phenoxy group may be used by mixing two or more.

The content of the monomer having a phenoxy group is preferably 1% by mass or more and 30% by mass or less, more preferably 2% by mass or more and 25% by mass or less, and further preferably 4% by mass or more and 20% by mass or less based on the total amount of the oligomer and the monomer. The resin composition includes a monomer having a phenoxy group in such a range, allowing a resin layer
having an appropriate Young's modulus as a secondary coating material for an optical fiber to be formed.

A monomer having no phenoxy group may be further comprised in the monomer, a. The monomer having no phenoxy group may be a monofunctional monomer or a multifunctional monomer.

Examples of the monofunctional monomer having no phenoxy group include (meth)acrylate monomers such as methyl (meth)acrylate, ethyl (meth)acrylate, propyl (meth)acrylate, n-butyl (meth)acrylate, sec-butyl (meth)acrylate, tert-butyl (meth)acrylate, isobutyl (meth)acrylate, n-pentyl (meth)acrylate, isopentyl (meth)acrylate, hexyl (meth)acrylate, heptyl (meth)acrylate, isoamyl (meth)acrylate, 2-ethylhexyl (meth)acrylate, n-octyl (meth)acrylate, isooctyl (meth)acrylate, isodecyl (meth)acrylate, lauryl (meth)acrylate, 4-tert-butylcyclohexanol (meth)acrylate, tetrahydrofurfuryl (meth)acrylate, benzyl (meth)acrylate, dicyclopentenyl (meth)acrylate, dicyclopentenyloxyethyl (meth)acrylate, dicyclopentanyl (meth)acrylate, nonylphenol polyethylene glycol (meth)acrylate, and isobomyl (meth)acrylate; carboxyl group containing monomers such as (meth)acrylic acid, (meth)acrylic acid dimer, carboxyethyl (meth)acrylate, carboxypentyl (meth)acrylate, and ω-carboxy-polycaprolactone (meth)acrylate; heterocycle containing (meth)acrylates such as N-acryloyl morpholine, N-vinyl pyrrolidone, N-vinyl caprolactam, N-acryloylpiperidine, N-methacryloylpiperidine, N-acryloylpyrrolidine, 3-(3-pyridine) propyl (meth)acrylate, and cyclic trimethylolpropane formal acrylate; maleimide monomers such as maleimide, N-cyclohexyl maleimide, and N-phenyl maleimide; N-substituted amide monomers such as (meth)acrylamide, N, N-dimethyl
(meth)acrylamide, N, N-diethyl (meth)acrylamide, N-hexyl (meth)acrylamide, N-methyl (meth)acrylamide, N-isopropyl (meth)acrylamide, N-butyl (meth)acrylamide, N-methylol (meth)acrylamide, and N-methylolpropane (meth)acrylamide; aminoalkyl (meth)acrylate monomers such as aminoethyl (meth)acrylate, aminopropyl (meth)acrylate, N, N-dimethylaminoethyl (meth)acrylate, and tert-butylaminoethyl (meth)acrylate; and succinimide monomers such as N-(meth)acryloyloxymethylene succinimide, N-(meth)acryloyl-6-oxyhexamethylene succinimide, and N- (meth)acryloyl-8-oxyoctamethylene succinimide.

Examples of the multifunctional monomer having no phenoxy group include ethylene glycol di(meth)acrylate, polyethylene glycol di(meth)acrylate, polypropylene glycol di(meth)acrylate, neopentyl glycol di(meth)acrylate, tripropylene glycol di(meth)acrylate, di(meth)acrylate of alkylene oxide adduct of bisphenol A, tetraethylene glycol di(meth)acrylate, hydroxypivalic acid neopentyl glycol di(meth)acrylate, 1,4-butanediol di(meth)acrylate, 1,6-hexanediol di(meth)acrylate, 1,9-nonanediol di(meth)acrylate, 1,12-dodecanediol di(meth)acrylate, 1,14-tetradecanediol di(meth)acrylate, 1,16-hexadecanediol di(meth)acrylate, 1,20-eicosanediol di(meth)acrylate, isopentyl diol di(meth)acrylate, 3-ethyl-1, 8-octanediol di(meth)acrylate, EO adduct of bisphenol A di(meth)acrylate, trimethylol propane tri(meth)acrylate, trimethylol octane tri(meth)acrylate, trimethylol propane polyethoxy tri(meth)acrylate, trimethylol propane polypropoxy tri(meth)acrylate, trimethylol propane polyethoxy polypropoxy tri(meth)acrylate, tris[(meth)acryloyloxyethyl] isocyanurate, pentaerythritol tri(meth)acrylate, pentaerythritol polyethoxy tetra(meth)acrylate, pentaerythritol polypropoxy tetra(meth)acrylate, pentaerythritol tetra(meth)acrylate, ditrimethylol propane tetra(meth)acrylate, dipentaerythritol tetra(meth)acrylate, dipentaerythritol penta(meth)acrylate, dipentaerythritol hexa(meth)acrylate, and caprolactone-modified tris[(meth)acryloyloxyethyl] isocyanurate.

The photopolymerization initiator can be appropriately selected from known radical photopolymerization initiators and used. Examples of the photopolymerization initiator include 1-hydroxycyclohexyl phenyl ketone (Omnirad 184 manufactured by IGM Resins), 2,2-dimethoxy-2-phenylacetophenone, 1-(4-isopropylphenyl)-2-hydroxy-2-methylpropan-1-one, bis(2,6-dimethoxybenzoyl)-2,4,4-trimethylpentylphosphine oxide, 2-methyl-1-[4-(methylthio)phenyl]-2-morpholino-propan-1-one (Omnirad 907 manufactured by IGM Resins), 2,4,6-trimethylbenzoyldiphenylphosphine oxide (Omnirad TPO manufactured by IGM Resins), and bis(2,4,6-trimethylbenzoyl) phenylphosphine oxide (Omnirad 819, manufactured by IGM Resins).

The resin composition may further contain a silane coupling agent, a leveling agent, an antifoaming agent, an antioxidant, and a sensitizer.

The silane coupling agent is not particularly limited as long as it does not disturb curing of the resin composition. Examples of the silane coupling agent include tetramethyl silicate, tetraethyl silicate, mercaptopropyl trimethoxysilane, vinyltrichlorosilane, vinyltriethoxysilane, vinyltris(P-methoxy-ethoxy)silane, β-(3,4-epoxycyclohexyl)-ethyltrimethoxysilane, dimethoxydimethylsilane, diethoxydimethylsilane, 3-acryloxypropyltrimethoxysilane, γ-glycidoxypropyltrimethoxysilane, γ-glycidoxypropylmethyldiethoxysilane, γ-methacryloxypropyltrimethoxysilane, N-(β-aminoethyl)-γ-aminopropyltrimethoxysilane, N-(β-aminoethyl)-γ-aminopropyltrimethyldimethoxysilane, N-phenyl-γ-aminopropyltrimethoxysilane, γ-chloropropyltrimethoxysilane, γ-mercaptopropyltrimethoxysilane, γ-aminopropyltrimethoxysilane, bis-[3-(triethoxysilyl)propyl]tetrasulfide, bis-[3 -(triethoxysilyl)propyl]disulfide, γ-trimethoxysilylpropyldimethylthiocarbamyl tetrasulfide, and γ-trimethoxysilylpropyl benzothiazyl tetrasulfide.

### (Inorganic oxide particles)

The inorganic oxide particles according to the present embodiment have a surface subjected to hydrophobic treatment. The hydrophobic treatment according to the present embodiment is introduction of a hydrophobic group onto the surface of the inorganic oxide particles. The inorganic oxide particles having a hydrophobic group introduced have excellent dispersibility in the resin composition. The hydrophobic group is a reactive group such as a (meth)acryloyl group or a vinyl group, or a non-reactive group such as an aliphatic hydrocarbon group (for example, an alkyl group) or an aromatic hydrocarbon group (for example, a phenyl group). In the case of the inorganic oxide particles having a reactive group, the resin layer having high Young's modulus is easy to form.

The inorganic oxide particles according to the present embodiment are dispersed in a dispersion medium. Using the inorganic oxide particles dispersed in the dispersion medium allows for uniform dispersion of the inorganic oxide particles in the resin composition and then improvement of the storage stability of the resin composition. The dispersion medium is not particularly limited as long as curing of the resin composition is not obstructed. The dispersion medium may be reactive or non-reactive.

A monomer such as a (meth)acryloyl compound and an epoxy compound can be used as the reactive dispersion medium. Examples of the (meth)acryloyl compound include 1,6-hexanediol di(meth)acrylate, EO-modified bisphenol A di(meth)acrylate, polyethylene glycol di(meth)acrylate, PO-modified bisphenol A di(meth)acrylate, polypropylene glycol di(meth)acrylate, and polytetramethylene glycol di(meth)acrylate. Compounds exemplified by monomers described above may be used as the (meth)acryloyl compound.

A ketone solvent such as methyl ethyl ketone (MEK), an alcohol solvent such as methanol (MeOH), or an ester solvent such as propylene glycol monomethyl ether acetate (PGMEA) may be used as a non-reactive dispersion medium. In the case of the non-reactive dispersion medium, the resin composition may be prepared by mixing the base resin and the inorganic oxide particles dispersed in the dispersion medium and removing a part of the dispersion medium.

The inorganic oxide particles dispersed in the dispersion medium remain to be dispersed in the resin layer after curing of the resin composition. When a reactive dispersion medium is used, the inorganic oxide particles are mixed with the dispersion medium in the resin composition and are incorporated in the resin layer with the dispersion condition maintained. When a non-reactive dispersion medium is used, at least a part of the dispersion medium evaporates and disappears from the resin composition, but the inorganic oxide particles remain in the resin composition with the dispersion condition remained and are also present in the cured resin layer with the dispersion condition remained. Electron microscope observation shows that the inorganic oxide particles present in the resin layer are in the condition of dispersion of the primary particle.

Due to excellent dispersion properties in the resin composition and easy formation of tough resin layer, it is preferable that the inorganic oxide particles are at least one selected from the group consisting of silicon dioxide (silica), zirconium dioxide (zirconia), aluminum oxide (alumina), magnesium oxide (magnesia), titanium oxide (titania), tin oxide, and zinc oxide. From the view point of excellent inexpensiveness, easy surface treatment, permeability to ultraviolet ray, easy provision of a resin layer with appropriate hardness, and the like, it is more preferable that the hydrophobic silica particles be used as the inorganic oxide particles according to the present embodiment.

From the viewpoint of increasing the Young's modulus of the resin film, the average primary particle size of the inorganic oxide particles is preferably 5 nm or more and 800 nm or less, more preferably 10 nm or more and 700 nm or less, and further preferably 10 nm or more and 650 nm or less. The average primary particle diameter can be measured with image analysis of electron microscope pictures, a light scattering method or a BET method, for example. The dispersion medium in which the primary particle of the inorganic oxide is dispersed appears to be visually transparent when the diameter of the primary particle is small. When the diameter of the primary particle diameter is relatively large (40 nm or more), the dispersion medium in which the primary particle is dispersed appears to be clouded, but the precipitate is not observed.

The content of the inorganic oxide particles is preferably 1% by mass or more and 60% by mass or less, more preferably 10% by mass or more and 50% by mass or less, and further preferably 15% by mass or more and 40% by mass or less based on the total amount of the oligomer, the monomer, and the inorganic oxide particles. The content of the inorganic oxide particles of 1% by mass or more allows for easy formation of the resin layer with excellent lateral pressure characteristics. The content of the inorganic oxide particles of 60% by mass or less allows for easy improvement in the application properties of the resin composition.

The resin composition according to the present embodiment is preferably used as the secondary coating material for the optical fiber. Using the resin composition according to the present embodiment for the secondary resin layer, the coating resin layer having excellent toughness can be formed and the lateral pressure characteristics of the optical fiber can be improved.

### <Optical fiber>

FIG. 1 is a schematic cross-section diagram showing an example of the optical fiber according to the present embodiment. The optical fiber 10 comprises the glass fiber 13 including the core 11 and the cladding 12, and the coating resin layer 16 including the primary resin layer 14 provided on the outer periphery of the glass fiber 13 and the secondary resin layer 15.

The cladding 12 surrounds the core 11. The core 11 and the cladding 12 mainly include glass such as silica glass, germanium-added silica glass or pure silica glass can be used, for example, in the core 11, and pure silica glass or fluorine-added silica glass can be used in the cladding 12.

In FIG. 1, for example, the outside diameter (D2) of the glass fiber 13 is about 100 µm to 125 µm, and the diameter (D1) of the core 11 constituting the glass fiber 13 is about 7 µm to 15 µm. The thickness of the coating resin layer 16 is typically about 22 µm to 70 µm. The thickness of each of the primary resin layer 14 and the secondary resin layer 15 may be about 5 µm to 50 µm.

When the outside diameter (D2) of the glass fiber 13 is about 125 µm and the thickness of the coating resin layer 16 is 60 µm or more and 70 µm or less, the thickness of each of the primary resin layer 14 and the secondary resin layer 15 may be about 10 µm to 50 µm, for example, the thickness of the primary resin layer 14 may be 35 µm and the thickness of the secondary resin layer 15 may be 25 µm. The outside diameter of the optical fiber 10 may be about 245 µm to 265 µm.

When the outer diameter (D2) of the glass fiber 13 is about 125 µm and the thickness of the coating resin layer 16 is 27 µm or more and 48 µm or less, the thickness of each of the primary resin layer 14 and the secondary resin layer 15 may be about 10 µm to 38 µm, for example, the thickness of the primary resin layer 14 may be 25 µm and the thickness of the secondary resin layer 15 may be 10 µm. The outside diameter of the optical fiber 10 may be about 179 µm to 221 µm.

When the outside diameter (D2) of the glass fiber 13 is about 100 µm and the thickness of the coating resin layer 16 is 22 µm or more and 37 µm or less, the thickness of each of the primary resin layer 14 and the secondary resin layer 15 may be about 5 µm to 32 µm, for example, the thickness of the primary resin layer 14 may be 25 µm and the thickness of the secondary resin layer 15 may be 10 µm. The outside diameter of the optical fiber 10 may be about 144 µm to 174 µm.

The resin composition according to the present embodiment can be applied to the secondary resin layer. The secondary resin layer can be formed by curing a resin composition comprising the above base resin and inorganic oxide particles. This can form the resin layer having excellent toughness.

A method for manufacturing the optical fiber according to the present embodiment comprises an application step of applying the above resin composition onto the outer periphery of a glass fiber composed of a core and a cladding; and a curing step of curing the resin composition by irradiation with ultraviolet rays after the application step.

The primary resin layer 14 can be formed by curing a resin composition including a urethane (meth)acrylate oligomer, a monomer, a photopolymerization initiator and a silane coupling agent. Prior art techniques can be used for a resin composition for the primary resin layer. A urethane (meth)acrylate oligomer, a monomer, a photopolymerization initiator and a silane coupling agent may be appropriately selected from compounds exemplified in the above base resin. The resin composition constituting the primary resin layer has composition different from the base resin forming the secondary resin layer.

### Examples

Hereinafter, the results of evaluation test using Examples and Comparative Examples according to the present disclosure will be shown, and the present disclosure is described in more detail. The present invention is not limited to these examples.

### [Resin composition for a secondary resin layer]

### (Oligomer)

A urethane acrylate oligomer (UA-1) obtained by reacting polypropylene glycol having a molecular weight of 2000, 2,4-tolylene diisocyanate, and hydroxyethyl acrylate, a urethane acrylate oligomer (UA-2) obtained by reacting polypropylene glycol having a molecular weight of 600, 2,4-tolylene diisocyanate, and hydroxyethyl acrylate, and an epoxy acrylate oligomer (EA) were prepared as the oligomers.

### (Monomer)

2-phenoxyethyl acrylate (POA, trade name "Light Acrylate PO-A" of Kyoeisha Chemical Co., Ltd.) and tripropylene glycol diacrylate (TPGDA, trade name "Viscoat # 310HP" of Osaka Organic Chemical Industry Co., Ltd.) were prepared as the monomers.

### (Photopolymerization initiator)

As the photopolymerization initiator, 1-hydroxycyclohexyl phenyl ketone and 2,4,6-trimethylbenzoyldiphenylphosphine oxide were prepared.

### (Inorganic oxide particles)

Silica sol including silica particles (Si-1 to Si-6) having the surface condition and the average primary particle size shown in Table 1 was prepared as the inorganic oxide particles.

**[Table 1]**

| Silica particles | Si-1 | Si-2 | Si-3 | Si-4 | Si-5 | Si-6 |
|---|---|---|---|---|---|---|
| Dispersion medium | MEK | MEK | MEK | MEK | MEK | MEK |
| Surface condition | Hydrophobic | Hydrophobic | Hydrophobic | Hydrophobic | Hydrophobic | Hydrophilic |
| Average primary particle size (nm) | 10 - 20 | 30 - 60 | 80 - 110 | 250 - 350 | 450 - 640 | 250 - 350 |

### (Resin composition)

First, a base resin was prepared by mixing the above oligomer, monomer, and photopolymerization initiator. Next, the silica sol was mixed with the base resin so as to have the content of the silica particles shown in Table 2 or Table 3, and then most of MEK (methyl ethyl ketone) as a dispersion medium was removed under reduced pressure to produce resin compositions of Examples and Comparative Examples, respectively. The content of remaining MEK in the resin composition was 5% by mass or less.

In Tables 2 and 3, the value of the oligomer and the monomer is the content based on the total amount of the oligomer and the monomer, and the value of the silica particles is the content based on the total amount of the monomer, the oligomer, and the silica particles.

### (Young's modulus)

The resin composition was applied onto a polyethylene terephthalate (PET) film by using a spin coater, and then cured by using an electrodeless UV lamp system ("VPS600 (D valve)" manufactured by Heraeus) at an integrated light amount of 900 mJ/cm² or more and 1100 mJ/cm² or less to form a resin layer having a thickness of 200 ± 20 µm on the PET film. The resin layer was peeled off from the PET film to obtain a resin film. The resin film was punched into a dumbbell shape of JIS K 7127 type 5 to prepare a test piece for measuring Young's modulus. A stress-strain curve was obtained by pulling the test piece under the conditions of 23 ± 2°C and 50 ± 10% RH, a tensile speed of 1 mm/min, and a distance between marked lines of 25 mm using a tensile tester. Young's modulus was determined by 2.5% secant line.

### (Breaking elongation)

A resin layer having a thickness of 50 ± 5 µm was formed on the PET film by the same operation as in the preparation of the above resin film. The resin layer was peeled off from the PET film to obtain a resin film. The resin film was punched into a dumbbell shape of JIS Z6251 type 3 to prepare a test piece for measuring the breaking elongation. Under the conditions of 23 ± 2°C and 50 ± 10% RH, the test piece was pulled at a speed of 1 mm/min using a material testing machine 5985 manufactured by INSTRON, and the elongation was measured with a high-precision video elongation meter AVE manufactured by INSTRON.

### [Production of optical fiber]

A urethane acrylate oligomer obtained by reacting polypropylene glycol having a molecular weight of 4000, isophorone diisocyanate, hydroxyethyl acrylate, and methanol was prepared. 75 parts by mass of the urethane acrylate oligomer, 12 parts by mass of a nonylphenol EO-modified acrylate, 6 parts by mass of N-vinylcaprolactam, 2 parts by mass of 1,6-hexanediol diacrylate, 1 part by mass of 2,4,6-trimethylbenzoyldiphenylphosphine oxide, and 1 part by mass of 3-mercaptopropyltrimethoxysilane were mixed to obtain a resin composition for the primary resin layer.

The resin composition for the primary resin layer and the resin composition of Examples or Comparative Examples for the secondary resin layer were applied onto the outer periphery of a 125 µm diameter glass fiber composed of a core and a cladding, and then the resin composition was cured by irradiation with ultraviolet rays and a primary resin layer having a thickness of 35 µm and a secondary resin layer having a thickness of 25 µm around the outer periphery thereof were formed to produce an optical fiber. A linear speed was 1500 m/min.

### (Bending test)

An optical fiber having a length of 1 m was wound around a mandrel having a diameter of 3 mm once, both ends were fixed, and the mandrel was reciprocated three times in the longitudinal direction, and the presence or absence of disconnection was confirmed.

**[Table 2]**

| Example | | 1 | 2 | 3 | 4 | 5 | 6 | 7 | 8 | 9 | 10 |
|---|---|---|---|---|---|---|---|---|---|---|---|
| Silica particles (% by mass) | Si-1 | 38 | 30 | 20 | - | - | - | - | 20 | 1 | 20 |
| | Si-2 | - | - | - | 30 | - | - | - | - | - | - |
| | Si-3 | - | - | - | - | 30 | - | - | - | - | - |
| | Si-4 | - | - | - | - | - | 30 | - | - | - | - |
| | Si-5 | - | - | - | - | - | - | 30 | - | - | - |
| Oligomer (% by mass) | UA-1 | 18.0 | 18.0 | 18.0 | 18.0 | 18.0 | 18.0 | 18.0 | - | - | - |
| | UA-2 | - | - | - | - | - | - | - | 50.0 | 50.0 | 60.0 |
| | EA | 45.0 | 45.0 | 45.0 | 45.0 | 45.0 | 45.0 | 45.0 | 27.4 | 27.4 | 22.0 |
| Monome r (% by mass) | POA | 10.0 | 10.0 | 10.0 | 10.0 | 10.0 | 10.0 | 10.0 | 6.1 | 6.1 | 4.9 |
| | TPGD A | 27.0 | 27.0 | 27.0 | 27.0 | 27.0 | 27.0 | 27.0 | 16.5 | 16.5 | 13.2 |
| Young's modulus (MPa) | | 2100 | 1800 | 1500 | 1750 | 1700 | 1700 | 1600 | 1500 | 1200 | 1400 |
| Breaking elongation (%) | | 3 | 8 | 14 | 7.5 | 7 | 6 | 5 | 30 | 40 | 35 |
| Disconnection | | Absenc e | Absenc e | Absenc e | Absenc e | Absenc e | Absenc e | Absenc e | Absenc e | Absenc e | Absenc e |

**[Table 3]**

| Comparative Example | | 1 | 2 | 3 | 4 | 5 | 6 |
|---|---|---|---|---|---|---|---|
| Silica particles (% by mass) | Si-1 | 30 | 38 | - | 38 | 20 | - |
| | Si-6 | - | - | 38 | - | - | - |
| Oligomer (% by mass) | UA-1 | 18.0 | 18.0 | 18.0 | 14.0 | - | 18.0 |
| | UA-2 | - | - | - | - | 75.0 | - |
| | EA | 45.0 | 45.0 | 45.0 | 47.2 | 13.7 | 45.0 |
| Monomer (% by mass) | POA | - | - | 10.0 | 10.5 | 3.1 | - |
| | TPGDA | 37.0 | 37.0 | 27.0 | 28.3 | 8.2 | 37.0 |
| Young's modulus (MPa) | | - | - | - | - | - | 1100 |
| Breaking elongation (%) | | 1 | < 1 | 1 | 2 | - | 18 |
| Disconnection | | Presence | - | Presence | Presence | - | Absence |

### Reference Signs List

10: Optical fiber, 11: Core, 12: Cladding, 13: Glass fiber, 14: Primary resin layer, 15: Secondary resin layer, 16: Coating resin layer.

## Claims

1. A resin composition for coating an optical fiber (10) comprising:
a base resin containing an oligomer comprising a urethane (meth)acrylate oligomer, a monomer, and a photopolymerization initiator; and
hydrophobic inorganic oxide particles,
wherein the urethane (meth)acrylate oligomer is obtained by reacting a polyol compound, a polyisocyanate compound and a hydroxyl group-containing (meth)acrylate compound,
wherein the monomer comprises a monomer having a phenoxy group,
wherein a hydrophobic group is introduced onto the surface of the inorganic oxide particles, and the hydrophobic group is a reactive group such as a (meth)acryloyl group or a vinyl group, or a non-reactive group such as an aliphatic hydrocarbon group or an aromatic hydrocarbon group, and
wherein a breaking elongation of a resin film obtained by curing the resin composition with an integrated light amount of 900 mJ/cm² or more and 1100 mJ/cm² or less is 2.5% or more and 50% or less at 23°C and a Young's modulus of the resin film is 1150 MPa or more and 2700 MPa or less at 23°C.

2. The resin composition according to claim 1, wherein a content of the urethane (meth)acrylate oligomer is 15% by mass or more and 70% by mass or less based on a total amount of the oligomer and the monomer.

3. The resin composition according to claim 1 or claim 2, wherein the inorganic oxide particles are at least one selected from the group consisting of silicon dioxide, zirconium dioxide, aluminum oxide, magnesium oxide, titanium oxide, tin oxide, and zinc oxide.

4. The resin composition according to any one of claim 1 to claim 3, wherein an average primary particle size of the inorganic oxide particles is 5 nm or more and 800 nm or less.

5. The resin composition according to any one of claim 1 to claim 4, wherein the breaking elongation of the resin film is 5.0% or more and 45% or less at 23°C.

6. An optical fiber (10) comprising:
a glass fiber (13) comprising a core (11) and a cladding (12);
a primary resin layer (14) being in contact with the glass fiber (13) and coating the glass fiber (13); and
a secondary resin layer (15) coating the primary resin layer (14),
wherein the secondary resin layer (15) comprises a cured product of the resin composition according to any one of claim 1 to claim 5.

7. A method for manufacturing an optical fiber (10), comprising:
an application step of applying the resin composition according to any one of claim 1 to claim 5 onto an outer periphery of a glass fiber (13) comprising a core (11) and a cladding (12); and
a curing step of curing the resin composition by irradiation with ultraviolet rays after the application step.

## Patentansprüche

1. Harzzusammensetzung zum Beschichten einer optischen Faser (10), umfassend:
ein Grundharz, das ein Oligomer enthält, das ein Urethan(meth)acrylat-Oligomer, ein Monomer und einen Photopolymerisationsinitiator umfasst; und
hydrophobe anorganische Oxidteilchen,
wobei das Urethan(meth)acrylat-Oligomer durch Umsetzen einer Polyolverbindung, einer Polyisocyanatverbindung und einer Hydroxylgruppen-haltigen (Meth)acrylatverbindung erhalten wird,
wobei das Monomer ein Monomer mit einer Phenoxygruppe umfasst,
wobei eine hydrophobe Gruppe auf der Oberfläche der anorganischen Oxidteilchen eingeführt ist und die hydrophobe Gruppe eine reaktive Gruppe, wie beispielsweise eine (Meth)acryloylgruppe oder eine Vinylgruppe, oder eine nichtreaktive Gruppe, wie beispielsweise eine aliphatische Kohlenwasserstoffgruppe oder eine aromatische Kohlenwasserstoffgruppe, ist, und
wobei die Bruchdehnung eines Harzfilms, der durch Härten der Harzzusammensetzung mit einer integrierten Lichtmenge von 900 mJ/cm² oder mehr und 1100 mJ/cm² oder weniger erhalten wird, 2,5 % oder mehr und 50 % oder weniger bei 23°C beträgt und das Young-Modul des Harzfilms 1150 MPa oder mehr und 2700 MPa oder weniger bei 23°C beträgt.

2. Harzzusammensetzung gemäß Anspruch 1, wobei der Gehalt des Urethan(meth)acrylat-Oligomers 15 Massen-% oder mehr und 70 Massen-% oder weniger beträgt, bezogen auf die Gesamtmenge des Oligomers und des Monomers.

3. Harzzusammensetzung gemäß Anspruch 1 oder Anspruch 2, wobei die anorganischen Oxidteilchen mindestens ein Vertreter, ausgewählt aus der Gruppe bestehend aus Siliciumdioxid, Zirkoniumdioxid, Aluminiumoxid, Magnesiumoxid, Titanoxid, Zinnoxid und Zinkoxid, sind.

4. Harzzusammensetzung gemäß mindestens einem der Ansprüche 1 bis 3, wobei die durchschnittliche Primärteilchengröße der anorganischen Oxidteilchen 5 nm oder mehr und 800 nm oder weniger beträgt.

5. Harzzusammensetzung gemäß mindestens einem der Ansprüche 1 bis 4, wobei die Bruchdehnung des Harzfilms 5,0 % oder mehr und 45 % oder weniger bei 23°C beträgt.

6. Optische Faser (10), umfassend:
eine Glasfaser (13) mit einem Kern (11) und einen Mantel (12) ;
eine primäre Harzschicht (14), die in Kontakt mit der Glasfaser (13) steht und die Glasfaser (13) beschichtet; und
eine sekundäre Harzschicht (15), die die primäre Harzschicht (14) beschichtet,
wobei die sekundäre Harzschicht (15) ein gehärtetes Produkt der Harzzusammensetzung gemäß mindestens einem der Ansprüche 1 bis 5 umfasst.

7. Verfahren zur Herstellung einer optischen Faser (10), umfassend:
einen Aufbringungsschritt des Aufbringens der Harzzusammensetzung gemäß mindestens einem der Ansprüche 1 bis 5 auf einen Außenumfang einer Glasfaser (13), die einen Kern (11) und einen Mantel (12) umfasst; und
einen Aushärtungsschritt des Aushärtens der Harzzusammensetzung durch Bestrahlung mit ultravioletten Strahlen nach dem Aufbringungsschritt.

## Revendications

1. Composition de résine pour le revêtement d'une fibre optique (10) comprenant :
une résine de base contenant un oligomère comprenant un oligomère de (méth)acrylate d'uréthane, un monomère, et un initiateur de photopolymérisation ; et
des particules d'oxyde inorganique hydrophobes,
dans laquelle l'oligomère de (méth)acrylate d'uréthane est obtenu par réaction d'un composé de polyol, d'un composé de polyisocyanate et d'un composé de (méth)acrylate contenant un groupe hydroxyle,
dans laquelle le monomère comprend un monomère présentant un groupe phénoxy,
dans laquelle un groupe hydrophobe est introduit sur la surface des particules d'oxyde inorganique, et le groupe hydrophobe est un groupe réactif tel qu'un groupe (méth)acryloyle ou un groupe vinyle, ou un groupe non réactif tel qu'un groupe hydrocarboné aliphatique ou un groupe hydrocarboné aromatique, et
dans laquelle un allongement à la rupture d'un film de résine obtenu par durcissement de la composition de résine à une intensité lumineuse intégrée de 900 mJ/cm² ou plus et de 1100 mJ/cm² ou moins est de 2,5 % ou plus et de 50 % ou moins à 23 °C et un module de Young du film de résine est de 1150 MPa ou plus et de 2700 MPa ou moins à 23 °C.

2. Composition de résine selon la revendication 1, dans laquelle une teneur de l'oligomère de (méth)acrylate d'uréthane est de 15 % en masse ou plus et de 70 % en masse ou moins sur la base d'une quantité totale de l'oligomère et du monomère.

3. Composition de résine selon la revendication 1 ou la revendication 2, dans laquelle les particules d'oxyde inorganique sont au moins une choisie dans le groupe constitué du dioxyde de silicium, du dioxyde de zirconium, de l'oxyde d'aluminium, de l'oxyde de magnésium, de l'oxyde de titane, de l'oxyde d'étain et de l'oxyde de zinc.

4. Composition de résine selon l'une quelconque de la revendication 1 à la revendication 3, dans laquelle une taille de particule primaire moyenne des particules d'oxyde inorganique est de 5 nm ou plus et de 800 nm ou moins.

5. Composition de résine selon l'une quelconque de la revendication 1 à la revendication 4, dans laquelle l'allongement à la rupture du film de résine est de 5,0 % ou plus et de 45 % ou moins à 23 °C.

6. Fibre optique (10) comprenant :
une fibre de verre (13) comprenant une âme (11) et une gaine (12) ;
une couche (14) de résine primaire étant en contact avec la fibre de verre (13) et revêtant la fibre de verre (13) ; et
une couche (15) de résine secondaire revêtant la couche (14) de résine primaire,
dans laquelle la couche (15) de résine secondaire comprend un produit durci de la composition de résine selon l'une quelconque de la revendication 1 à la revendication 5.

7. Procédé de fabrication d'une fibre optique (10), comprenant :
une étape d'application consistant à appliquer la composition de résine selon l'une quelconque de la revendication 1 à la revendication 5 sur une périphérie externe d'une fibre de verre (13) comprenant une âme (11) et une gaine (12) ; et
une étape de durcissement consistant à durcir la composition de résine par irradiation avec des rayons ultraviolets après l'étape d'application.
